# EUROPÄISCHE PATENTSCHRIFT

(11) **EP 2 295 313 B1**
(45) Veröffentlichungstag und Bekanntmachung des Hinweises auf die Patenterteilung: **05.09.2012**
(21) Anmeldenummer: 10005992.2
(22) Anmeldetag: 10.06.2010
(51) Int. Cl.: B62D 25/24, B60D 1/60, B60R 19/02

(54) **Befestigungssystem für eine Abdeckung eines Kraftfahrzeugs**
Attachment system for a cover in a motor vehicle
Dispositif de fixation de l'élément de couverture pour véhicule automobile

(30) Priorität: 15.09.2009 DE 202009012423 U
(43) Veröffentlichungstag der Anmeldung: 16.03.2011
(73) Patentinhaber: SMP Deutschland GmbH, 79268 Bötzingen (DE)
(72) Erfinder: Pagano, Nadine, 79331 Teningen (DE); Fleischhauer, Albert, 77767 Appenweier (DE); Zipfel, Rainer, 79206 Breisach (DE); Otto, Peter, 22869 Schenefeld (DE); Bodynek, Anton, 79288 Gottenheim (DE); Schmidt, Gunter, 79115 Freiburg (DE); Kern, Ralf, 97839 Esselbach 2 (DE); Roch, Michael, 79268 Bötzingen (DE); Herr, Gottfried, 79216 Elzach (DE)
(74) Vertreter: Neunert, Peter Andreas

(56) Entgegenhaltungen:
- DE-A1-102006 054 618
- US-A1- 2009 174 213

## Beschreibung

Die vorliegende Erfindung betrifft ein Befestigungssystem für eine Abdeckung mit den Merkmalen des Oberbegriffs des Anspruchs 1.

Abdeckungen für Aussparungen in Verkleidungsteilen für Kraftfahrzeuge werden überall dort eingesetzt, wo Funktionselemente unterhalb der Verkleidung angeordnet sind, die leicht zugänglich sein müssen. Derartige Funktionselemente können beispielsweise Abschleppösen sein, die hinter Stossfängerverkleidung von Kraftfahrzeugen angeordnet sind.

Von den Abdeckungen, die aus dem Stand der Technik bekannt sind, wird gefordert , dass sie leicht zugänglich sind und zudem über einfache Öffnungs- und Schließmechanismen verfügen, wodurch die Handhabung des darunter liegenden Funktionselements erleichtert wird.

Aus der DE 102 53 881 A1 ist eine Vorrichtung zum Abdecken einer Aussparung in einer Außenhülle eines Kraftfahrzeuges bekannt, die einen um eine Achse schwenkbaren Deckel aufweist, in dessen Innenseite Zapfen zum Einrasten in eine entsprechende Öffnung angeformt sind.

In der gattungsgemäßen DE 10 2006 054 618 A1 wird eine Abdeckung für eine Abschleppöse an einem Kraftfahrzeugstossfänger beschrieben, die aus einem Ethylen-Propylen-Dien-Monomer gefertigt ist, das mit Talkum und Glasfasern verstärkt ist.

Üblicherweise bestehen derartige Abdeckungen aus Kunststoff, insbesondere dann, wenn das entsprechende Verkleidungsteil ebenfalls aus Kunststoff gefertigt ist. Kunststoffe haben den

Nachteil, dass alterungsbedingte Materialermüdungen auftreten und abhängig von der Einsatzhäufigkeit und der Belastung der Rastelemente Brüche an den Rastelementen auftreten, sodass eine einwandfreie Öffnungs- und Schließfunktion nach einigen Jahren nicht mehr gewährleistet ist. In der DE 10 2006 054 618 A1 hat man versucht, dieses Problem dadurch zu lösen, dass man ein verbessertes Kunststoffmaterial eingesetzt hat, das der Materialermüdung besser standhalten soll. Diese Vorgehensweise hat jedoch den Nachteil, dass man auf ein bestimmtes Kunststoffmaterial festgelegt ist, das unter Umständen nicht für jeden beliebigen Bereich des Kraftfahrzeugs, in dem Verkleidungen mit entsprechenden Aussparungen eingesetzt werden, geeignet ist. Darüber hinaus kommt als weiterer Nachteil dazu, dass Verstärkungsmaterialien eingesetzt werden müssen, um dem Kunststoff die nötige Festigkeit und Lebensdauer zu verleihen, was die Kosten für das Bauteil erhöht.

Es besteht somit weiterhin Bedarf an Abdeckungen aus Kunststoffmaterialien, die die oben geschilderten Nachteile des Standes der Technik nicht aufweisen.

Gelöst wird das Problem durch ein Befestigungssystem für eine Abdeckung mit den Merkmalen des Anspruchs 1. Vorteilhafte Ausgestaltungen und Weiterentwicklungen des erfindungsgemäßen Befestigungssystems sind Gegenstand der Unteransprüche.

Es wurde gefunden, dass durch eine besondere Art der Anordnung der Rastclipse die Rastelemente nicht mehr einseitig belastet werden und die Lebensdauer der Rastclipse erhöht werden kann. Dabei sind durch eine optimierte geometrische Gestaltung der Rastclipse wesentlich mehr Montagen und Demontagen der Abdeckung möglich, ohne dass dadurch die Haltekräfte verringert werden oder die Öffnungs- und Schließfunktion des Deckels durch abbrechende Rastelemente gefährdet ist.

Dies gelingt durch ein Befestigungssystem für eine Abdeckung aus thermoplastischem Kunststoff, wobei die Verkleidung im Randbereich der abzudeckenden Aussparung einen abgesenkten Auflagerand für die Abdeckung mit gleichmäßig angeordneten Rastöffnungen aufweist. Auf der Unterseite der Abdeckung sind nun direkt angeformte korrespondierende Rastclipse als Rastelemente für den Eingriff in die Rastöffnungen in dem abgesenkten Auflagerand vorgesehen, wobei diese Rastclipse abwechselnd mit unterschiedlichem Abstand zum Abdeckungsrand angeordnet sind, so dass ihre Kräfte alternierend jeweils auf die obere oder die untere Rastkante der gleichmäßig angeordneten Rastöffnungen in dem Auflagerand wirken.

Auf diese Weise kann die Abdeckung für einen als Aussparung in einer Verkleidung eines Kraftfahrzeugs angeordneten Zugang zu einem Funktionselement ohne großen Kraftaufwand fest und sicher verschlossen werden, was durch die unterschiedliche Belastung der Rastkanten in den Rastöffnungen im Verkleidungsbauteil ermöglicht wird. Durch diese optimale Kraftverteilung wird der Halt der Rastöffnungen verbessert, sodass nicht nur die Länge der Rastclipse reduziert werden kann, sondern auch die Abdeckung selbst dann einen ausreichend festen Halt bietet, wenn die Rastclipse und Rastöffnungen abgerundete Rastkonturen aufweisen. Durch die Abrundung der Rastkonturen wird zudem der Verschleiß an den Rastelementen verringert und die Lebensdauer der Rastelemente erhöht.

Die alternierende Kraftverteilung hat außerdem den Vorteil, dass die umlaufende Fuge leichter konstant gehalten werden kann und so die Optik verbessert wird.

Da die auf den thermoplastischen Kunststoff wirkenden Kräfte relative moderat sind, kann sowohl die Abdeckung als auch die Verkleidung des Kraftfahrzeugs aus einem beliebigen thermoplastischen Kunststoff ausgewählt aus der Gruppe Polypropylen (PP), Polyethylen (PE), Polyamid (PA), Polystyrol (PS), Polyvinylchlorid (PVC), Polycarbonat (PC), Polybutylenterephthalat (PBT), Polyacrylnitril (PAN), Polymethylmethacrylat (PMMA), Acrylnitril-Butadien-Styrol (ABS), Acrylnitril-Butadien-Styrol-Polycarbonat-Copolymerisat (ABS-PC), Polyvinylether (PVE), Styrol-Acrylnitril (SAN) und/oder Polyoxymethylen (POM) eingesetzt werden. Will man für besondere Abdeckungen die Standzeit zusätzlich erhöhen, kann man zu diesen Kunststoffen, wie bereits im Stand der Technik beschrieben, zusätzlich Additive zur Verstärkung, wie zum Beispiel Glasfasern und Kohlefasern, oder Füllstoffe, wie zum Beispiel Talkum, zugeben.

Eine vorteilhafte Ausgestaltung der vorliegenden Erfindung sieht vor, dass der Auflagerand für die Abdeckung soweit abgesenkt ist, dass die Sichtseite der Abdeckung bündig mit der Oberfläche der Verkleidung abschließt.

Im Folgenden wird die Erfindung anhand von Zeichnungen ausführlich erläutert, dabei zeigen
- Figur 1: die Sichtseite einer geschlossenen Abde- ckung mit zwei eingezeichneten Schnittebe- nen A und B und die
- Figuren 2A und 2B: Ausschnitte aus den jeweils dazu gehören- den Schnitten.

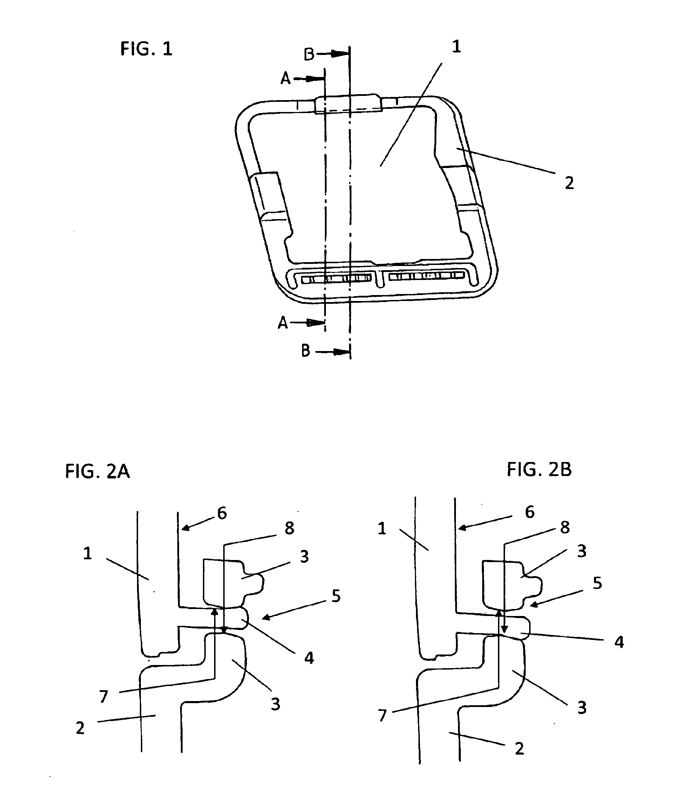

Bei der in der Figur 1 dargestellten Abdeckung 1 handelt es sich um eine Abdeckung 1 zum Abdecken einer Aussparung in einer Stossfängerverkleidung, die als Zugang zu einer Abschleppöse vorgesehen ist. Die Oberseite der Abdeckung 1 befindet sich etwa auf gleicher Höhe wie die Oberfläche der Stossfängerverkleidung, wobei die Abdeckung 1 mit Hilfe von Rastclipsen in Rastöffnungen in einem abgesenkten Auflagerand der Verkleidung gehalten wird. In dieser Darstellung sind zwei einander benachbarte Schnittebenen A und B eingezeichnet, deren Schnittbilder in Figuren 2A und 2B wiedergegeben sind.

Die Figur 2A zeigt die Ansicht auf einen Ausschnitt in der Schnittebene A, bei dem ein Teil einer Abdeckung 1 zu sehen ist, die auf ihrer Unterseite 6 einen direkt angeformten Rastclips 4 aufweist, der in einer Rastöffnung 5 im Verkleidungsbauteil 2 eingreift. Die Rastöffnung 5 ist in einem gesenkten Auflagerand 3 des Verkleidungsbauteils 2 angeordnet, der den Randbereich der abzudeckenden Aussparung bildet. Die Kraft des Rastclipses 4 wirkt in diesem Fall in Richtung des Randes der Aussparung und wirkt auf die obere Rastkante 7 der Rastöffnung 5, während die untere Rastkante 8 entlastet ist.

Die Figur 2B zeigt einen Ausschnitt aus der benachbarten Schnittebene B der gleichen Abdeckung 1 mit einem direkt angeformten Rastclips 4, der ebenfalls in eine Rastöffnung 5 im abgesenkten Auflagerand 3 des Verkleidungsteils 2 eingreift. Im Gegensatz zur Figur 2A wirkt sich nun die Kraft des alternierenden Rastclipses 4 in die Gegenrichtung aus, nämlich in Richtung der Fahrzeugverkleidung 2, und es wird die untere Rastkante 8 belastet, während die obere Rastkante der Rastöffnung 5 entlastet ist.

In beiden Figuren 2A und 2B ist zu erkennen, dass die Rastelemente 4 und 5 abgerundete Rastkonturen aufweisen, die ohne großen Kraftaufwand überwunden werden können. Den festen Halt der Abdeckung gewährleistet die alternierende Krafteinwirkung der unterschiedlich angeordneten Rastclipse 4 auf die obere Rastkante 7 bzw. die unter Rastkante 8, wodurch die Rastkräfte gleichmäßig verteilt werden und die Gefahr der Ermüdung durch einseitige Benutzung der Rastelemente (4, 5) vermieden wird.

### Bezugszeichenliste

- 1: Abdeckung
- 2: Verkleidung
- 3: Auflagerand
- 4: Rastclips
- 5: Rastöffnung
- 6: Unterseite Abdeckung
- 7: obere Rastkante
- 8: untere Rastkante

## Patentansprüche

1. Befestigungssystem für eine Abdeckung (1) aus thermoplastischem Kunststoff für einen als Aussparung in einer Verkleidung (2) eines Kraftfahrzeugs angeordneten Zugang zu einem Funktionselement, wobei die Verkleidung (2) im Randbereich der Aussparung einen abgesenkten Auflagerand (3) mit gleichmäßig angeordneten Rastöffnungen (5) aufweist, wobei die Abdeckung (1) auf ihrer Unterseite (6) direkt angeformte korrespondierende Rastclipse (4) als Rastelemente für den Eingriff in die Rastöffnungen (5) in dem abgesenkten Auflagerand (3) aufweist,
**dadurch gekennzeichnet, dass**
die Rastclipse (4) auf der Unterseite (6) der Abdeckung (1) abwechselnd mit unterschiedlichem Abstand vom Abdeckungsrand angeordnet sind, so dass ihre Kräfte alternierend jeweils auf die oberen oder die unteren Rastkanten (7, 8) der gleichmäßig angeordneten Rastöffnungen (5) in dem Auflagerand (3) wirken.

2. Befestigungssystem nach Anspruch 1,
**dadurch gekennzeichnet, dass**
der Auflagerand (3) so weit abgesenkt ist, dass die Sichtseite der Abdeckung (1) mit der Oberfläche der Verkleidung (2) bündig abschließt.

3. Befestigungssystem nach Anspruch 1 oder 2,
d**adurch gekennzeichnet, dass**
die Rastclipse (4) und Rastöffnungen (5) abgerundete Rastkonturen aufweisen.

4. Befestigungssystem nach einem der Ansprüche 1 bis 3,
**dadurch gekennzeichnet, dass**
die Abdeckung (1) sowie die Verkleidung (2) des Kraftfahrzeugs aus einem thermoplastischen Kunststoff ausgewählt aus der Gruppe Polypropylen (PP), Polyethylen (PE), Polyamid (PA), Polystyrol (PS), Polyvinylchlorid (PVC), Polycarbonat (PC), Polybutylenterephthalat (PBT), Polyacrylnitril (PAN), Polymethylmethacrylat (PMMA), AcrylnitrilButadien-Styrol (ABS), Acrylnitril-Butadien-Styrol/Polycarbonat-Copolymerisat (ABS-PC), Polyphenylether (PPE), Styrol-Acrylnitril (SAN) und/oder Polyoxymethylen (POM) hergestellt sind.

5. Befestigungssystem nach Anspruch 4,
**dadurch gekennzeichnet, dass**
der thermoplastische Kunststoff Additive zur Verstärkung, wie z.B. Glasfasern, Kohlefasern etc., sowie Füllstoffe, wie z.B. Talkum, enthält.

## Claims

1. An attachment system for a cover (1) of thermoplastic material for an access - provided in the form of an aperture in a lining (2) of a motor vehicle - to a functional element, wherein the lining (2) has a recessed supporting edge (3) with uniformly arranged catch openings (5) in the edge region of the aperture, wherein the cover (1) has corresponding catch clips (4) formed directly on its underside (6) as catch elements for engagement in the catch openings (5) in the recessed supporting edge (3), **characterized in that** the catch clips (4) are arranged at a differing distance from the edge of the cover in an alternating manner on the underside (6) of the cover (1), so that their forces act in an alternating manner upon the upper or the lower catch edges (7, 8) of the uniformly arranged catch openings (5) in the supporting edge (3) in each case.

2. An attachment system according to claim 1, **characterized in that** the supporting edge (3) is recessed to such a degree that the visible side of the cover (1) terminates flush with the surface of the lining (2).

3. An attachment system according to claim 1 or 2, **characterized in that** the catch clips (4) and the catch openings (5) have rounded catch contours.

4. An attachment system according to any one of claims 1 to 3, **characterized in that** the cover (1) and the lining (2) of the motor vehicle are produced from a thermoplastic material selected from the group comprising polypropylene (PP), polyethylene (PE), polyamide (PA), polystyrene (PS), polyvinylchloride (PVC), polycarbonate (PC), polybutylene terephthalate (PBT), polyacrylonitrile (PAN), polymethyl methacrylate (PMMA), acrylonitrile butadiene styrene (ABS), acrylonitrile butadiene styrene / polycarbonate copolymerizate (ABS-PC), polyphenyl ether (PPE), styrene acrylonitrile (SAN), and/or polyoxymethylene (POM).

5. An attachment system according to claim 4, **characterized in that** the thermoplastic material contains additives for reinforcement, such as for example glass fibres, carbon fibres etc., and fillers, such as for example talcum.

## Revendications

1. Système de fixation d'un élément de recouvrement (1) en matériau synthétique thermoplastique, d'un accès à un élément fonctionnel réalisé sous la forme d'un évidement dans une garniture (2) d'un véhicule automobile, cette garniture (2) comportant, dans la zone du bord de l'évidement, un bord d'appui (3) surbaissé équipé d'ouvertures d'encliquetage (5) réparties uniformément, l'élément de recouvrement (1) comportant sur sa face inférieure (6) des crochets d'encliquetage (4) correspondants, directement formés, constituant des éléments d'encliquetage destinés à venir en prise dans les ouvertures d'encliquetage (5) situées dans le bord d'appui surbaissé (3),
**caractérisé en ce que**
les crochets d'encliquetage (4) sont alternativement situés, sur la face inférieure (6) de l'élément de recouvrement (1), à une distance différente du bord de cet élément de recouvrement, de sorte que leurs forces agissent respectivement alternativement sur le bord d'encliquetage supérieur ou sur le bord d'encliquetage inférieur (7, 8) des ouvertures d'encliquetage (5) uniformément réparties dans le bord d'appui (3).

2. Système de fixation conforme à la revendication 1,
**caractérisé en ce que**
le bord d'appui (3) est suffisamment abaissé pour que la face visible de l'élément de recouvrement (1) ferme la surface de la garniture (2) en affleurant à celle-ci.

3. Système de fixation conforme à la revendication 1 ou 2,
**caractérisé en ce que**
les pinces d'encliquetage (4) et les ouvertures d'encliquetage (5) ont des contours d'encliquetage arrondis.

4. Système de fixation conforme à l'une des revendications 1 à 3,
**caractérisé en ce que**
l'élément de recouvrement (1) et la garniture (2) du véhicule automobile, sont réalisés en un matériau synthétique thermoplastique choisi dans le groupe formé par le polypropylène (PP), le polyéthylène (PE), le polyamide (PA), le polystyrène (PS), le chlorure de polyvinyle (PVC), le polycarbonate (PC), le polybutylène téréphtalate (PBT), le polyacrylonitrile (PAN), le polyméthylméthacrylate (PMMA), l'acrylonitrile-butadiène-styrène (ABS), le copolymère acrylonitrile-butadiène-styrène/polycarbonate (ABS-PC), le polyphényléther (PPE), le styrène-acrylonitrile (SAN), et/ou le polyoxyméthylène (POM).

5. Système de fixation conforme à la revendication 4,
**caractérisé en ce que**
le matériau synthétique thermoplastique renferme des additifs de renforcement tels que par exemple des fibres de verre, des fibres de carbone etc.., ou des charges telles que par exemple du talc.
